(19) Europäisches Patentamt / European Patent Office / Office européen des brevets

(11) **EP 2 310 238 B1**

(12) **FASCICULE DE BREVET EUROPEEN**

(45) Date de publication et mention de la délivrance du brevet:
**26.06.2013 Bulletin 2013/26**

(21) Numéro de dépôt: **09784458.3**

(22) Date de dépôt: **03.07.2009**

(51) Int Cl.:
***B60T 7/12*** *(2006.01)*

(86) Numéro de dépôt international:
**PCT/FR2009/051297**

(87) Numéro de publication internationale:
**WO 2010/015762 (11.02.2010 Gazette 2010/06)**

(54) **PROCEDE DE DESSERRAGE DE FREINS D'UN VEHICULE AUTOMOBILE EQUIPE D'UN DISPOSITIF D'ASSISTANCE AU DEMARRAGE EN COTE, UN TEL DISPOSITIF D'ASSISTANCE ET VEHICULE AUTOMOBILE LE COMPORTANT**

HILLHOLDERLÖSEVERFAHREN, -ANORDNUNG UND -FAHRZEUG

METHOD OF RELEASING THE BRAKES OF A MOTOR VEHICLE FITTED WITH AN ASSISTANCE DEVICE FOR STARTING ON A SLOPE, SUCH AN ASSISTANCE DEVICE, AND MOTOR VEHICLE COMPRISING IT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.08.2008 FR 0855476**

(43) Date de publication de la demande:
**20.04.2011 Bulletin 2011/16**

(73) Titulaire: **Renault s.a.s.**
**92100 Boulogne-Billancourt (FR)**

(72) Inventeurs:
• **POTHIN, Richard**
**F-78760 Jouars-Ponchartrain (FR)**
• **DE-RINALDIS, Alessandro**
**F-75018 Paris (FR)**
• **CAYOL, Olivier**
**F-78000 Versailles (FR)**

(56) Documents cités:
EP-A- 0 781 946    WO-A-2004/058551
FR-A- 2 713 573    FR-A- 2 915 159

**Description**

**DOMAINE TECHNIQUE :**

La présente invention concerne un procédé de desserrage des freins d'un véhicule automobile équipé d'un dispositif d'assistance au démarrage en côte. Elle concerne également un tel dispositif d'assistance et un véhicule automobile le comportant.

Lorsqu'un véhicule automobile est à l'arrêt dans une côte, il est souvent difficile, voire parfois dangereux, de faire démarrer ce véhicule dans le sens ascendant. Pour bien des conducteurs, les démarrages en côte dans le sens ascendant sont de ce fait une source importante de stress.

Lors d'un démarrage en côte, le conducteur doit éviter autant que possible un recul de son véhicule, sans faire caler le moteur d'entraînement de ce véhicule et, pour ce faire, il lui faut combiner deux actions qui sont le desserrage des freins et l'accouplement progressif des roues d'entraînement du véhicule au moteur d'entraînement de ce véhicule.

Des dispositifs de contrôle et de commande généralement appelés « dispositifs d'aide au démarrage » ou « dispositifs d'assistance au démarrage » ont été mis au point de manière à faciliter la tâche du conducteur lors d'un démarrage en côte, en gérant ce démarrage à sa place lorsque ce conducteur appuie sur la pédale d'accélération après avoir arrêté de maintenir manuellement les freins du véhicule dans leur position de freinage.

**TECHNIQUES ANTERIEURES :**

Un dispositif d'assistance au démarrage en côte tel que mentionné précédemment est décrit dans la demande de brevet français FR-2 736 027. Après que le conducteur a arrêté de maintenir manuellement les freins du véhicule dans leur position serrée, ce dispositif prend le relais du conducteur en maintenant à son tour le serrage des freins jusqu'à réception d'une commande de faire démarrer le véhicule. Si le conducteur quitte alors le poste de conduite du véhicule sans avoir actionné au préalable le frein à main ou frein de stationnement, une alarme est déclenchée à partir d'une information en provenance d'un détecteur de présence sur le siège du conducteur et d'une information à partir d'un capteur de pression, afin d'alerter le ou les occupants du véhicule. Si cette alarme n'est pas perçue ou ne se déclenche pas, ou bien encore s'il n'en est pas tenu compte, le frein de stationnement n'est pas actionné alors que le maintien du serrage des freins par un liquide sous pression dans un circuit hydraulique de transmission d'une commande de freinage n'est pas considéré comme pouvant maintenir et immobiliser un véhicule en stationnement avec un degré de sécurité suffisant.

Un autre dispositif d'assistance au démarrage en côte est décrit dans le document WO 2004/058551. Après que le conducteur a arrêté de maintenir manuellement les freins du véhicule dans leur position serrée, ce dispositif d'assistance au démarrage en côte maintient le serrage des freins jusqu'à réception d'une commande de faire démarrer le véhicule. En l'absence d'une telle commande, le dispositif d'assistance au démarrage en côte relâche les freins à l'expiration d'une temporisation prédéterminée. Suite à cela, le véhicule est entraîné par son propre poids dans le cas où le frein à main ou frein de stationnement n'a pas été serré auparavant et où le véhicule est dans une pente. Dans un tel cas, il s'ensuit un risque non négligeable d'accident, en particulier si le conducteur n'est plus correctement installé au poste de conduite du véhicule à l'expiration de la temporisation de durée prédéterminée.

**EXPOSE DE L'INVENTION**

L'invention a au moins pour but d'améliorer la sécurité liée à l'utilisation d'un véhicule automobile équipé d'un dispositif d'assistance au démarrage en côte.

Selon l'invention, ce but est atteint grâce à un procédé de desserrage de freins d'un véhicule automobile équipé d'un dispositif d'assistance au démarrage en côte, caractérisé en ce qu'il comprend des étapes dans lesquelles :

b) si aucune commande de démarrage du véhicule n'a lieu après qu'a pris fin un maintien manuel des freins du véhicule dans une position d'immobilisation de ce véhicule à l'arrêt, le dispositif d'assistance desserre les freins progressivement selon un pilotage adapté pour amener le véhicule à se mettre en mouvement sous son propre poids en tendant globalement vers des conditions de vitesse et d'accélération non nulles prédéterminées, puis
c) lorsque lesdites conditions prédéterminées sont considérées comme atteintes, le dispositif d'assistance arrête au moins momentanément de desserrer les freins.

Qu'il soit dans le sens d'un recul ou dans le sens contraire, le départ du véhicule sous l'action de son propre poids signale, notamment au conducteur, que le frein de stationnement n'est pas serré ou suffisamment serré. Le conducteur peut alors immédiatement réagir en serrant ce frein de stationnement alors que la vitesse et l'accélération du véhicule sont encore faibles, de sorte que le risque d'un heurt de ce véhicule contre un obstacle demeure très limité.

Avantageusement, le procédé comporte une étape qui commence dès qu'a pris fin ledit maintien manuel des freins dans la position d'immobilisation du véhicule et dans laquelle :

a) pendant une temporisation prédéterminée à l'expiration de laquelle est engagée l'étape b), le dispositif d'assistance maintient automatiquement les freins du véhicule dans ladite position d'immobilisation de ce véhicule si aucune commande de démarrage du véhicule n'a lieu.

Avantageusement, dans l'étape b), le dispositif d'assistance effectue ledit pilotage en employant comme masse du véhicule une masse prédéterminée et effectue une estimation de la masse réelle du véhicule à partir d'un écart de temps entre un départ réel et un départ estimé du véhicule sous l'action de son propre poids, puis le dispositif d'assistance effectue ledit pilotage en employant comme masse du véhicule ladite estimation de la masse réelle du véhicule, ledit départ estimé du véhicule automobile étant calculé à partir de ladite masse prédéterminée.

Avantageusement, le serrage des freins résulte de l'application d'une pression de serrage et l'étape b) comporte au moins une séquence dans laquelle :

b2) on fait chuter la pression de serrage des freins de manière sensiblement linéaire en fonction du temps, selon un taux de décroissance sensiblement égal à $k_{s1}$ défini comme faisant partie de la solution d'un système de deux équations à deux inconnues, qui est le suivant :

$$\begin{cases} a_{cons} = \dfrac{k_{s1} \times k_{\mu} \times D_1}{M_1 \times R} \\ V_{cons} = \dfrac{1}{2} \times \dfrac{k_{s1} \times k_{\mu} \times D_1^2}{M_1 \times R} \end{cases}$$

, où $a_{cons}$, $V_{cons}$, $k_{\mu}$, $M_1$ et R sont respectivement une accélération fixée comme une des conditions prédéterminées, une vitesse fixée comme une des conditions prédéterminées, un coefficient d'efficacité des freins, une masse du véhicule automobile et le rayon moyen des roues du véhicule, tandis que $k_{s1}$ est l'une des inconnues et que $D_1$ est l'autre inconnue, à savoir le temps pour atteindre lesdites conditions prédéterminées à partir du début de la séquence b2).

Avantageusement, dans la séquence b2), on emploie comme masse $M_1$ du véhicule ladite masse prédéterminée, l'étape b) comportant une séquence qui suit la séquence b2) et dans laquelle :

b3) on fait chuter la pression de serrage des freins de manière sensiblement linéaire en fonction du temps, selon un taux de décroissance sensiblement égal à $k_{s2}$ défini comme faisant partie de la solution d'un système de deux équations à deux inconnues, qui est le suivant :

$$\begin{cases} a_{cons} = \dfrac{\Delta M}{M_1} \times g \times \sin(\alpha) + \dfrac{k_{s2} \times k_{\mu} \times D_2}{M_1 \times R} \\ V_{cons} = \dfrac{\Delta M}{M_1} \times g \times \sin(\alpha) \times D_2 + \dfrac{1}{2} \times \dfrac{k_{s2} \times k_{\mu} \times D_2^2}{M_1 \times R} \end{cases}$$

, où g, $\alpha$, $M_2$ et $\Delta M$ sont respectivement l'accélération de la pesanteur, une estimation de l'angle d'inclinaison de l'axe antéropostérieur du véhicule automobile par rapport à l'horizontale, ladite estimation de la masse réelle du véhicule et l'écart entre la masse prédéterminée $M_1$ et cette estimation $M_2$ selon l'équation $\Delta M = M_1 - M_2$, tandis que $k_{s2}$ est l'une des inconnues et que $D_2$ est l'autre inconnue, à savoir le temps pour atteindre lesdites conditions prédéterminées à partir du début de la séquence b3).

Avantageusement, dans l'étape b), le dispositif d'assistance effectue l'estimation $M_2$ de la masse réelle du véhicule selon une équation qui est la suivante :

$$M_2 = M_1 - \frac{k_{s1} \times k_\mu \times \Delta t}{g \times \sin(\alpha) \times R}$$

, où $\Delta t$ est l'écart de temps entre les départs réel et estimé du véhicule sous l'action de son propre poids.

Avantageusement, l'étape b) comporte une séquence que la séquence b2) suit et dans laquelle :

b1) le dispositif d'assistance desserre les freins à une vitesse prédéterminée.

Avantageusement, avant la séquence b2), le dispositif d'assistance évalue une pression minimale de serrage en deçà de laquelle la pression de serrage des freins est insuffisante pour que ces freins parviennent à maintenir le véhicule immobilisé à l'encontre du poids de ce véhicule. Le dispositif d'assistance passe de la séquence b1) à la séquence b2) lorsque la pression de serrage des freins atteint un seuil évalué à partir de ladite pression minimale de serrage.

Avantageusement, le dispositif d'assistance vérifie régulièrement au moins une information relative à une détection d'une éventuelle commande de démarrage du véhicule, tout au long du procédé de desserrage des freins, et interrompt prématurément ce procédé si une telle commande de démarrage du véhicule est détectée.

L'invention a également pour objet un dispositif d'assistance au démarrage en côte pour un véhicule automobile, caractérisé en ce qu'il est conçu pour effectuer un desserrage progressif des freins du véhicule automobile si aucune commande de démarrage du véhicule n'a lieu après qu'a pris fin un maintien manuel des freins du véhicule dans une position d'immobilisation de ce véhicule à l'arrêt, ce desserrage progressif s'effectuant selon un pilotage adapté pour amener le véhicule à se mettre en mouvement sous son propre poids en tendant sensiblement vers des conditions de vitesse et d'accélération non nulles prédéterminées, le dispositif d'assistance étant conçu pour arrêter le desserrage des freins lorsque lesdites conditions prédéterminées sont considérées comme atteintes.

Avantageusement, ce dispositif d'assistance au démarrage en côte est conçu pour mettre en oeuvre un procédé tel que défini ci-dessus.

L'invention a encore pour objet un véhicule automobile qui comporte un dispositif d'assistance tel que défini ci-dessus.

## DESCRIPTION SOMMAIRE DES FIGURES

L'invention sera bien comprise à la lecture de la description qui va suivre, donnée uniquement à titre d'exemple et faite en se référant aux dessins annexés, parmi lesquels :

- la figure 1 est un schéma simplifié d'une installation de freinage qui équipe un véhicule automobile conforme à l'invention ;
- la figure 2 est une vue schématique et latérale sur laquelle le véhicule automobile équipé de l'installation de freinage de la figure 1 est à l'arrêt dans une pente ;
- la figure 3 est un schéma synoptique de la logique de déroulement d'un procédé qui est conforme à l'invention et qui est plus précisément un procédé de desserrage des freins du véhicule de la figure 2 ; et
- la figure 4 est une représentation graphique de l'évolution de la pression P de serrage des freins du véhicule de la figure 2 en fonction du temps t, pendant le déroulement du procédé dont la logique est représentée à la figure 3.

## MANIERE POSSIBLE DE REALISER L'INVENTION

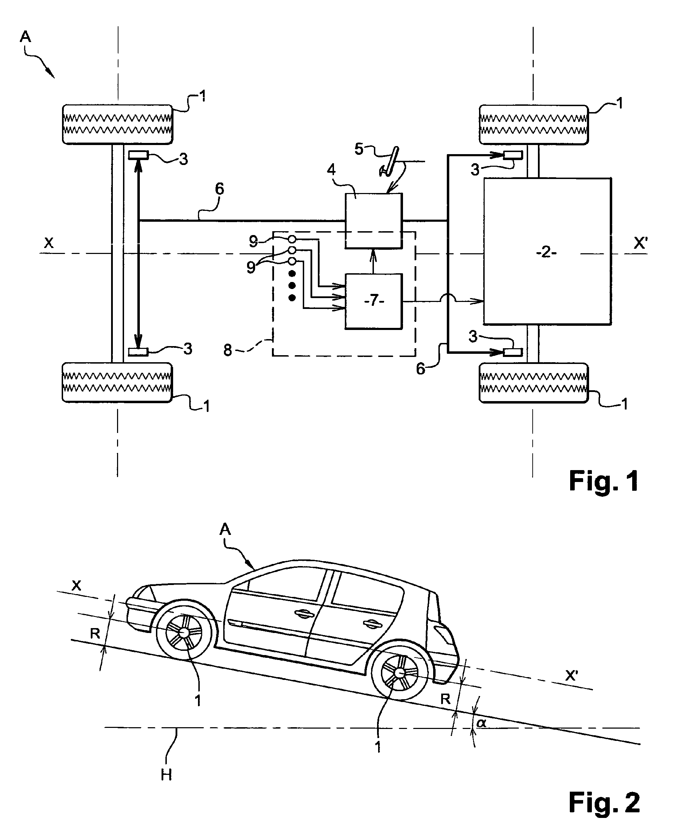

Sur la figure 1, un véhicule automobile A est symbolisé par ses quatre roues 1 et par son système d'entraînement **2,** qui est accouplé à plusieurs de ces roues **1** et qui comprend classiquement un moteur, tel qu'un moteur thermique ou électrique ou bien hybride, un embrayage et une boîte de vitesses.

Dans ce qui suit et dans les revendications annexées, les termes « avant », « arrière », « antéropostérieur », ainsi que les termes analogues, se réfèrent au sens normal de progression du véhicule automobile **A.**

A chaque roue **1** est associé un frein **3** constitutif d'une installation de freinage, qui comprend en outre un système **4** de transmission de commandes vers les freins **3.** Ce système **4** est connu en soi et ses constituants ne sont pas représentés dans un souci de clarté. Parmi ces constituants, il peut notamment y avoir un réservoir de liquide hydraulique, un maître-cylindre ou un autre dispositif générateur ou doseur de pression hydraulique sous la commande d'une pédale de frein **5.** D'une manière connue en soi, le système **4** de transmission de commandes peut également comprendre une pompe haute pression, un accumulateur de pression hydraulique relié à cette pompe, ainsi qu'une électrovanne de commutation connectée de manière à pouvoir mettre en communication l'accumulateur de pression ou le maître-cylindre avec tout ou partie des freins **3**. Plusieurs constituants de ce système **4** sont reliés entre eux et/ou aux freins **3** par un circuit hydraulique, dont plusieurs branches sont schématisées et référencées **6** à la figure 1.

Toujours sur cette figure 1, la référence 7 désigne une unité électronique de contrôle et de commande ou calculateur, qui fait partie d'un dispositif d'assistance au démarrage en côte **8** et qui est à même de commander le système d'entraînement **2**, ainsi que l'électrovanne de commutation du système **4**, de manière à gérer un démarrage du véhicule **A** à la place du conducteur de ce véhicule. Cette unité électronique 7 est raccordée à plusieurs capteurs **9**, qui comptent notamment au moins un capteur ou un estimateur de la pression de serrage des freins **3** et un capteur ayant pour fonction de détecter un déplacement du véhicule **A** vers l'avant ou vers l'arrière. Ce dernier capteur peut par exemple être un capteur de vitesse ou un capteur d'accélération.

Un autre capteur **9** a pour fonction de mesurer un angle référencé $\alpha$ à la figure 2, où le véhicule **A** est à l'arrêt dans une pente. Cet angle $\alpha$ est plus précisément l'angle d'inclinaison de l'axe antéropostérieur **X-X'** du véhicule **A** par rapport à l'horizontale **H**.

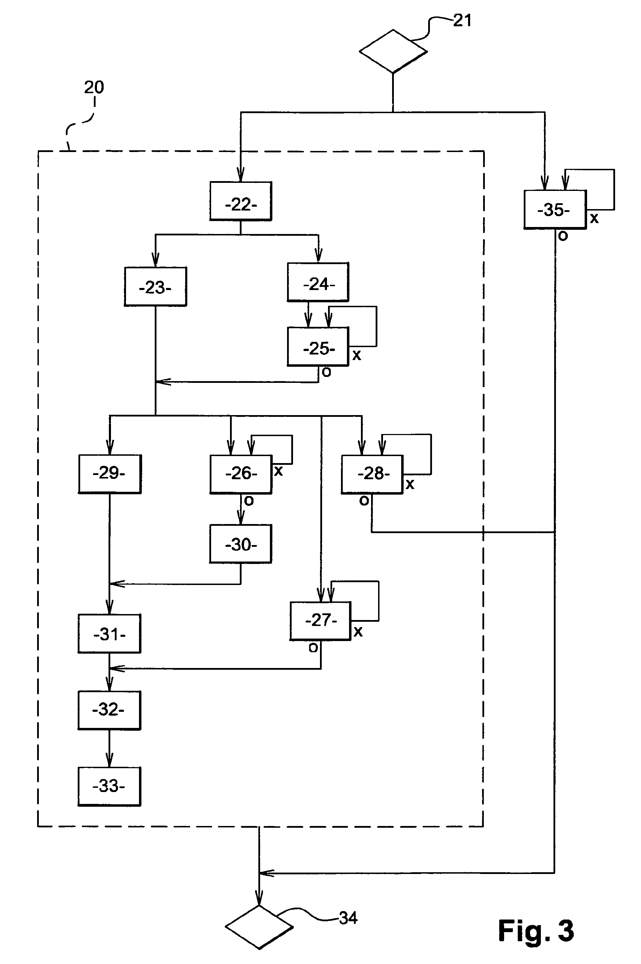

L'unité électronique 7 est à même aussi bien de gérer un démarrage du véhicule A à la place du conducteur, d'une manière connue en soi, que de conduire le procédé **20** dont la logique de déroulement est illustrée par l'organigramme de la figure 3. Ce procédé **20** est un procédé de desserrage des freins **3**. Il est démarré par la fin **21** d'une action sur la pédale de frein **5** par le conducteur alors que le véhicule **A** est à l'arrêt.

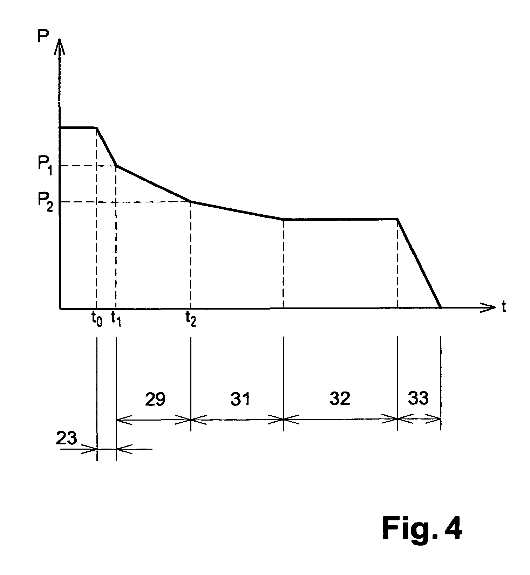

Dès que le conducteur cesse d'appuyer sur cette pédale de frein **5**, l'unité électronique 7 commande le maintien **22** du serrage des freins pendant une première temporisation, avantageusement comprise entre une seconde et dix secondes. A l'expiration de cette première temporisation, le dispositif d'assistance **8** entre dans une séquence **23** du procédé **20**, en commençant d'effectuer un premier desserrage progressif et contrôlé des freins 3. Ce premier desserrage commence à un instant noté $t_0$ à la figure 4. Il consiste en une réduction de la pression $P$ de serrage des freins **3**. Cette pression $P$ est la pression moyenne s'exerçant au niveau des freins **3**, entre des plaquettes de frein et des disques rotatifs sur lesquels appuient ces plaquettes et qui sont solidaires des roues **1**. En d'autres termes, il s'agit d'une force de serrage divisée par la surface sur laquelle s'applique cette force et qui est la surface de contact entre une plaquette de frein et un disque rotatif solidaire d'une roue **1**.

Parallèlement au premier desserrage des freins **3** est effectuée une estimation **24** dans laquelle, au moyen d'une mesure en provenance du capteur **9** d'évaluation de l'inclinaison du véhicule **A**, l'unité électronique 7 estime à partir de quelle valeur la pression de serrage des freins 3 n'est plus suffisante pour empêcher que le véhicule **A** soit entraîné par son propre poids. Dans ce qui suit, cette valeur est appelée pression minimale de serrage $P_{min}$. Elle est estimée en utilisant la relation suivante :

$$P_{\min} = \frac{M_1 \times g \times \sin(\alpha) \times R}{k_\mu} \qquad (1)$$

, où $M_1$ est une masse prédéterminée, fixée comme étant la masse maximale pouvant être atteinte par le véhicule automobile **A**, et où g, $R$, et $k_\mu$ sont respectivement l'accélération de la pesanteur, le rayon moyen des roues du véhicule **A** et un coefficient d'efficacité des freins 3. Ce coefficient $k_\mu$ dépend du type des freins **3** et, plus généralement, des spécificités de l'installation de freinage qui comporte ces freins **3**.

A partir de la pression minimale de serrage $P_{min}$, l'unité électronique 7 calcule une pression de seuil $P_1$ de la manière suivante : $P_1 = kr \times P_{\min}$, où $k_r$ est un coefficient de sécurité supérieur ou égal à 1.

Lorsque la pression de seuil $P_1$ a été calculée, l'unité électronique 7 la compare à la pression de serrage réelle, dans le test **25**. Tant que cette pression de serrage réelle est supérieure à la pression de seuil $P_1$, le test **25** est réitéré régulièrement, tandis que le premier desserrage contrôlé de la séquence **23** se poursuit. Ce premier desserrage s'effectue à une première vitesse constante qui est prédéterminée et qui peut, par exemple, être de l'ordre de 50 bars/s dans le cas d'un système de freinage hydraulique, c'est-à-dire dans le cas de l'exemple illustré.

Toujours dans la séquence **23**, l'unité électronique 7 résout le système à deux équations et deux inconnues suivant :

$$\begin{cases} a_{cons} = \dfrac{k_{s1} \times k_\mu \times D_1}{M_1 \times R} \\[2mm] V_{cons} = \dfrac{1}{2} \times \dfrac{k_{s1} \times k_\mu \times D_1^2}{M_1 \times R} \end{cases} \qquad (2)$$

, où $a_{cons}$ et $V_{cons}$ sont respectivement une accélération fixée et une vitesse fixée, tandis que $k_{s1}$ et $D_1$ sont les inconnues.

Plus précisément, $a_{cons}$ et $V_{cons}$ sont des conditions de vitesse et d'accélération prédéterminées dont on souhaite qu'elles soient atteintes par le véhicule **A** sous l'action de son propre poids. Ces conditions de vitesse et d'accélération prédéterminées sont choisies à la fois de manière à ne pas pouvoir être atteintes sans que le conducteur du véhicule **A** puisse ne pas s'apercevoir d'un recul anormal de ce véhicule et de manière à être suffisamment basses pour laisser autant de temps que possible à ce conducteur pour réagir, c'est-à-dire de manière à minimiser les risques d'accident du fait du recul non attendu du véhicule. Par exemple, $a_{cons}$ et $V_{cons}$ peuvent être respectivement de l'ordre de 1 m.s$^{-2}$ et de 0,2 m.s$^{-1}$.

$D_1$ est une durée. $k_{s1}$ est un taux de décroissance, à savoir la vitesse constante à laquelle il faudrait desserrer les freins **3** à partir de la pression $P_1$ pour que les conditions prédéterminées $a_{cons}$ et $V_{cons}$ puissent être atteintes au bout de la durée $D_1$, si la masse réelle du véhicule était la masse maximale $M_1$.

Lorsque le test **25** conclut que la pression réelle de serrage des freins **3** a atteint la pression de seuil $P_1$ telle qu'estimée à l'étape **24**, le dispositif d'assistance **8** règle la vitesse de desserrage des freins **3** à la valeur $k_{s1}$ et son unité électronique **7** se met à effectuer trois nouveaux tests, qui sont les tests référencés **26, 27** et **28**.

Après le changement de la vitesse de desserrage des freins **3** commence un deuxième desserrage progressif et contrôlé **29** des freins **3**, à partir de l'instant noté $t_1$ à la figure 4. Ce deuxième desserrage **29** s'effectue linéairement à la vitesse constante $k_{s1}$, c'est-à-dire selon la relation suivante :

$$P(t) = P_1 - k_{s1} \times (t - t_1) \tag{3}$$

, où $t$ et $P(t)$ ou P sont respectivement le temps et la pression de serrage des freins **3** au cours de ce temps $t$, la même origine ou instant initial étant choisi pour $t$ et $t_1$.

Ainsi qu'on peut le voir à la figure 4, $k_{s1}$ est inférieure à la première vitesse de desserrage des freins **3** dans la séquence **23**, cette première vitesse étant élevée pour que la séquence **23** soit aussi courte que possible.

Le test **26** consiste à répondre à la question de savoir si le véhicule **A** s'est mis en mouvement. Dans la négative, ce test **26** est réitéré, tandis que le desserrage **29** à la deuxième vitesse prédéterminée se poursuit.

Lorsque le test **26** conclut que le véhicule **A** s'est mis en mouvement, un écart $\Delta M$ entre la masse maximale $M_1$ et la masse réelle du véhicule **A** est estimée dans une étape **30**, à partir de l'écart de temps $\Delta t$ entre le départ réel et le départ estimé du véhicule **A** sous l'action de son propre poids, c'est-à-dire entre le moment du départ réel du véhicule **A** et un instant calculé comme étant celui auquel aurait dû avoir lieu ce départ si la masse du véhicule **A** était la masse maximale $M_1$. L'estimation de l'écart $\Delta M$ s'effectue à l'aide de la relation suivante :

$$\Delta M = \frac{k_{s1} \times k_\mu \times \Delta t}{g \times \sin(\alpha) \times R} \tag{4}$$

A partir de $\Delta M$, il est aisé d'obtenir une estimation $M_2$ de la masse réelle du véhicule **A,** dans la mesure où $\Delta M = M_1 - M_2$.

Une fois que $\Delta M$ et $M_2$ ont été déterminés, l'unité électronique **7** calcule une correction sur la vitesse de desserrage des freins **3,** toujours dans l'étape **30,** et détermine ainsi une nouvelle vitesse constante $k_{s2}$ de desserrage de ces freins 3 en la basant sur l'estimation $M_2$ de la masse réelle du véhicule **A.**

Plus précisément, l'unité électronique 7 détermine la vitesse $k_{s2}$ comme étant l'une des inconnues d'un système de deux équations à deux inconnues, en résolvant ce système qui est le suivant :

$$\begin{cases} a_{cons} = \dfrac{\Delta M}{M_1} \times g \times \sin(\alpha) + \dfrac{k_{s2} \times k_\mu \times D_2}{M_1 \times R} \\[2mm] V_{cons} = \dfrac{\Delta M}{M_1} \times g \times \sin(\alpha) \times D_2 + \dfrac{1}{2} \times \dfrac{k_{s2} \times k_\mu \times D_2^{2}}{M_1 \times R} \end{cases} \tag{5}$$

, où $D_2$ est l'autre inconnue, à savoir le temps pour atteindre lesdites conditions prédéterminées $a_{cons}$ et $V_{cons}$ à partir d'un deuxième changement de vitesse de desserrage des freins 3, c'est-à-dire d'un passage du taux de décroissance $k_{s1}$ au taux de décroissance $k_{s2}$.

Sur la figure 4, l'instant auquel a lieu ce deuxième changement de vitesse de desserrage des freins **3** est noté $t_2$. A cet instant $t_2$, la pression de serrage des freins **3** a atteint la valeur notée $P_2$.

Dès que le taux de décroissance $k_{s2}$ a été déterminé, un troisième desserrage progressif et contrôlé **31** des freins 3 commence à partir de l'instant $t_2$, puis la pression P ou P(t) de serrage de ces freins 3 décroît linéairement selon la relation suivante :

$$P(t) = P_2 - k_{s2} \times (t - t_2) \qquad (6)$$

, où la même origine ou instant initial est choisi pour $t$ et $t_2$.

Dans le test **27**, l'unité électronique 7 vérifie si les conditions de vitesse et d'accélération prédéterminées $a_{cons}$ et $V_{cons}$ ont été atteintes ou non. Pour ce faire, elle n'effectue un test que sur l'une de ces deux conditions, à savoir sur l'accélération fixée $a_{cons}$. Dès que cette accélération $a_{cons}$ a été atteinte, il est considéré que les deux conditions de vitesse et d'accélération ont été atteintes. Ces deux conditions peuvent également être considérées comme atteintes après que l'une et l'autre l'ont effectivement été, que ce soit simultanément ou bien avec un décalage dans le temps.

Lorsque le test **27** considère que les conditions de vitesse et d'accélération $a_{cons}$ et $V_{cons}$ sont atteintes, l'unité électronique 7 interrompt le desserrage des freins **3** pendant une deuxième temporisation, dont la durée prédéterminée est avantageusement comprise entre 1 et 10 secondes. Le maintien **32** de la pression de serrage des freins **3** à un niveau sensiblement constant fige, sensiblement à la valeur $a_{cons}$, l'accélération du véhicule **A** entraîné par son propre poids.

Qu'elle soit dans le sens d'un recul ou dans le sens contraire, la mise en mouvement du véhicule **A** signale au conducteur que le frein de stationnement n'est pas serré ou suffisamment serré. Le conducteur peut alors immédiatement réagir en serrant ce frein de stationnement alors que la vitesse du véhicule **A** est encore faible, de sorte que le risque d'un heurt de ce véhicule **A** contre un obstacle demeure très faible.

A l'expiration de la deuxième temporisation, le desserrage des freins **3** reprend, par exemple à une vitesse prédéterminée telle que celle employée lors du premier desserrage de freins **3** à la séquence **23,** ce que désigne la référence **33.**

Dans le test **28,** l'unité électronique **7** vérifie si la pression de serrage des freins **3** est ou non arrivée à la valeur nulle. Tant que les freins **3** sont soumis à une pression de serrage non nulle, le test **28** est réitéré régulièrement. Lorsque les freins **3** ne sont plus soumis à une pression de serrage, l'unité électronique 7 interrompt le procédé **20,** dont la fin est désignée par la référence **34.**

Le premier desserrage des freins **3** pendant la séquence **23** s'effectue rapidement puisque sa vitesse est élevée. Il s'arrête avant qu'ait lieu le départ du véhicule **A** sous l'action de son propre poids. Un tel départ du véhicule **A** se produit alors que le desserrage des freins **3** s'effectue à la deuxième vitesse de desserrage $k_{s1}$, c'est-à-dire à une vitesse à laquelle le véhicule automobile tend globalement vers les conditions de vitesse et d'accélération prédéterminées $a_{cons}$ et $V_{cons}$. L'instant auquel a lieu ce départ est utilisé pour corriger la vitesse de desserrage des freins **3,** dans le sens d'une approche plus précise des conditions de vitesses et d'accélération prédéterminées $a_{cons}$ et $V_{cons}$.

En même temps qu'elle exécute le procédé **20** de desserrage progressif des freins **3,** l'unité électronique 7 effectue régulièrement un test **35,** dans lequel elle vérifie l'absence ou la présence d'une commande de démarrage du véhicule **A.** Cette commande peut, par exemple, être l'action d'appuyer sur la pédale d'accélération du véhicule **A.** Tant qu'aucune commande de démarrage du véhicule **A** n'est détectée, le test **35** est régulièrement réitéré sans aucune autre conséquence. En revanche, si un démarrage sans recul du véhicule **A** est détecté suite à une commande de démarrage, l'unité électronique 7 interrompt immédiatement le procédé **20** de desserrage progressif des freins 3 et le remplace par une libération rapide des freins afin que le véhicule **A** ne soit pas retenu lors de son démarrage.

L'invention ne se limite pas au mode de réalisation décrit précédemment. En particulier, elle ne se limite pas au cas d'un système de freinage hydraulique. Au contraire, elle s'étend également au cas où le système de freinage est d'un autre type, en particulier au cas d'un système de freinage électrique.

**Revendications**

1. Procédé de desserrage de freins (3) d'un véhicule automobile (A) équipé d'un dispositif d'assistance au démarrage en côte (8), **caractérisé en ce qu'**il comprend des étapes (23-27, 29-32) dans lesquelles :

   b) si aucune commande de démarrage du véhicule (A) n'a lieu après qu'a pris fin un maintien manuel des freins (3) du véhicule (A) dans une position d'immobilisation de ce véhicule à l'arrêt, le dispositif d'assistance (8) desserre les freins (3) progressivement selon un pilotage adapté pour amener le véhicule (A) à se mettre en mouvement sous son propre poids en tendant globalement vers des conditions de vitesse et d'accélération non nulles prédéterminées ($a_{cons}$ et $V_{cons}$), puis

c) lorsque lesdites conditions prédéterminées ($a_{cons}$ et $V_{cons}$) sont considérées comme atteintes, le dispositif d'assistance (8) arrête de desserrer les freins (3).

2.  Procédé selon la revendication 1, **caractérisé en ce qu'**il comporte une étape (22) qui commence dès qu'a pris fin ledit maintien manuel des freins (3) dans la position d'immobilisation du véhicule (A) et dans laquelle :

    a) pendant une temporisation prédéterminée à l'expiration de laquelle est engagée l'étape b), le dispositif d'assistance (8) maintient automatiquement les freins (3) du véhicule (A) dans ladite position d'immobilisation de ce véhicule (A) si aucune commande de démarrage du véhicule (A) n'a lieu.

3.  Procédé selon l'une quelconque des revendications précédentes, **caractérisé en ce que**, dans l'étape b), le dispositif d'assistance (8) effectue ledit pilotage en employant comme masse du véhicule (A) une masse prédéterminée ($M_1$) et effectue une estimation ($M_2$) de la masse réelle du véhicule (A) à partir d'un écart de temps ($\Delta t$) entre un départ réel et un départ estimé du véhicule (A) sous l'action de son propre poids, puis le dispositif d'assistance (8) effectue ledit pilotage en employant comme masse du véhicule (A) ladite estimation ($M_2$) de la masse réelle du véhicule (A), ledit départ estimé du véhicule automobile (A) étant calculé à partir de ladite masse prédéterminée ($M_1$).

4.  Procédé selon l'une quelconque des revendications précédentes, **caractérisé en ce que** le serrage des freins (3) résulte de l'application d'une pression de serrage (P) et **en ce que** l'étape b) comporte au moins une séquence (29) dans laquelle :

    b2) on fait chuter la pression (P) de serrage des freins (3) de manière sensiblement linéaire en fonction du temps, selon un taux de décroissance sensiblement égal à $k_{s1}$ défini comme faisant partie de la solution d'un système de deux équations à deux inconnues, qui est le suivant :

$$\begin{cases} a_{cons} = \dfrac{k_{s1} \times k_\mu \times D_1}{M_1 \times R} \\[2ex] V_{cons} = \dfrac{1}{2} \times \dfrac{k_{s1} \times k_\mu \times D_1{}^2}{M_1 \times R} \end{cases}$$

, où $a_{cons}$, $V_{cons}$, $k_\mu$, $M_1$ et R sont respectivement une accélération fixée comme une des conditions prédéterminées, une vitesse fixée comme une des conditions prédéterminées, un coefficient d'efficacité des freins, une masse du véhicule automobile (A) et le rayon moyen des roues du véhicule (A), tandis que $k_{s1}$ est l'une des inconnues et que $D_1$ est l'autre inconnue, à savoir le temps pour atteindre lesdites conditions prédéterminées à partir du début de la séquence b2).

5.  Procédé selon les revendications 3 et 4, **caractérisé en ce que**, dans la séquence b2), on emploie comme masse $M_1$ du véhicule (A) ladite masse prédéterminée, l'étape b) comportant une séquence (31) qui suit la séquence b2) et dans laquelle :

    b3) on fait chuter la pression (P) de serrage des freins (3) de manière sensiblement linéaire en fonction du temps, selon un taux de décroissance $k_{s2}$ défini comme faisant partie de la solution d'un système de deux équations à deux inconnues, qui est le suivant :

$$\begin{cases} a_{cons} = \dfrac{\Delta M}{M_1} \times g \times \sin(\alpha) + \dfrac{k_{s2} \times k_\mu \times D_2}{M_1 \times R} \\[2ex] V_{cons} = \dfrac{\Delta M}{M_1} \times g \times \sin(\alpha) \times D_2 + \dfrac{1}{2} \times \dfrac{k_{s2} \times k_\mu \times D_2{}^2}{M_1 \times R} \end{cases}$$

, où $g$, $\alpha$, $M_2$ et $\Delta M$ sont respectivement l'accélération de la pesanteur, une estimation de l'angle d'inclinaison de l'axe antéropostérieur (X-X') du véhicule automobile (A) par rapport à l'horizontale (H), ladite estimation de la masse réelle du véhicule (A) et l'écart entre la masse prédéterminée $M_1$ et cette estimation $M_2$ selon l'équation $\Delta M = M_1 - M_2$, tandis que $k_{s2}$ est l'une des inconnues et que $D_2$ est l'autre inconnue, à savoir le temps pour atteindre lesdites conditions prédéterminées à partir du début de la séquence b3).

6. Procédé selon la revendication 5, **caractérisé en ce que**, dans l'étape b), le dispositif d'assistance (8) effectue l'estimation ($M_2$) de la masse réelle du véhicule (A) selon une équation qui est la suivante :

$$M_2 = M_1 - \frac{k_{s1} \times k_\mu \times \Delta t}{g \times \sin(\alpha) \times R}$$

, où $M_2$ et $\Delta t$ sont respectivement l'estimation de la masse réelle du véhicule (A) et l'écart de temps entre les départs réel et estimé du véhicule (A) sous l'action de son propre poids.

7. Procédé selon l'une quelconque des revendications 4 à 6, **caractérisé en ce que** l'étape b) comporte une séquence (23) que la séquence b2) suit et dans laquelle :

   b1) le dispositif d'assistance desserre les freins à une vitesse prédéterminée.

8. Procédé selon la revendication 7, **caractérisé en ce que**, avant la séquence b2), le dispositif d'assistance (3) évalue une pression minimale de serrage ($P_{min}$) en deçà de laquelle la pression (P) de serrage des freins (3) est insuffisante pour que ces freins (3) parviennent à maintenir le véhicule (A) immobilisé à l'encontre du poids de ce véhicule (A), et **en ce que** le dispositif d'assistance (3) passe de la séquence b1) à la séquence b2) lorsque la pression (P) de serrage des freins (3) atteint un seuil ($P_1$) évalué à partir de ladite pression minimale de serrage.

9. Procédé selon l'une quelconque des revendications précédentes, **caractérisé en ce que** le dispositif d'assistance (8) vérifie régulièrement au moins une information relative à une détection d'une éventuelle commande de démarrage du véhicule (A), tout au long du procédé de desserrage des freins, et interrompt prématurément ce procédé si une telle commande de démarrage du véhicule (A) est détectée.

10. Dispositif d'assistance au démarrage en côte pour un véhicule automobile (A), **caractérisé en ce qu'**il est conçu pour effectuer un desserrage progressif des freins (3) du véhicule automobile (A) si aucune commande de démarrage du véhicule (A) n'a lieu après qu'a pris fin un maintien manuel des freins (3) du véhicule (A) dans une position d'immobilisation de ce véhicule (A) à l'arrêt, ce desserrage progressif s'effectuant selon un pilotage adapté pour amener le véhicule (A) à se mettre en mouvement sous son propre poids en tendant globalement vers des conditions de vitesse et d'accélération non nulles prédéterminées ($a_{cons}$ et $V_{cons}$), le dispositif d'assistance (8) étant conçu pour arrêter le desserrage des freins (3) lorsque lesdites conditions prédéterminées ($a_{cons}$ et $V_{cons}$) sont considérées comme atteintes.

11. Dispositif d'assistance selon la revendication 10, **caractérisé en ce qu'**il est conçu pour mettre en oeuvre un procédé (20) selon l'une quelconque des revendications 1 à 9.

12. Véhicule automobile, **caractérisé en ce qu'**il comporte un dispositif d'assistance (8) selon l'une quelconque des revendications 10 et 11.

**Patentansprüche**

1. Verfahren zum Lösen von Bremsen (3) eines mit einer Berganfahrhilfevorrichtung (8) ausgestatteten Kraftfahrzeugs (A), **dadurch gekennzeichnet, dass** es Schritte (23-27, 29-32) enthält, in denen:

   b) wenn keine Anfahrsteuerung des Fahrzeugs (A) stattfindet, nachdem ein manueller Halt der Bremsen (3) des Fahrzeugs (A) in einer Blockierstellung dieses stehenden Fahrzeugs beendet wurde, die Hilfsvorrichtung (8) die Bremsen (3) progressiv gemäß einer Steuerung löst, die geeignet ist, um das Fahrzeug (A) dazu zu bringen, sich unter seinem eigenen Gewicht in Bewegung zu setzen, indem es global zu vorbestimmten Geschwindigkeits- und Beschleunigungsbedingungen ungleich Null ($a_{cons}$ und $V_{cons}$) tendiert, dann,

c) wenn die vorbestimmten Bedingungen ($a_{cons}$ und $V_{cons}$) als erreicht angesehen werden, die Hilfsvorrichtung (8) aufhört, die Bremsen (3) zu lösen.

2. Verfahren nach Anspruch 1, **dadurch gekennzeichnet, dass** es einen Schritt (22) aufweist, der beginnt, sobald der manuelle Halt der Bremsen (3) in der Blockierstellung des Fahrzeugs (A) beendet wurde, und in dem:

a) während einer vorbestimmten Verzögerung, nach der der Schritt b) eingeleitet wird, die Hilfsvorrichtung (8) automatisch die Bremsen (3) des Fahrzeugs (A) in der Blockierstellung dieses Fahrzeugs (A) hält, wenn keine Anfahrsteuerung des Fahrzeugs (A) stattfindet.

3. Verfahren nach einem der vorhergehenden Ansprüche, **dadurch gekennzeichnet, dass** im Schritt b) die Hilfsvorrichtung (8) die Steuerung ausführt, indem sie als Masse des Fahrzeugs (A) eine vorbestimmte Masse ($M_1$) verwendet, und eine Schätzung ($M_2$) der realen Masse des Fahrzeugs (A) ausgehend von einer Zeitabweichung ($\Delta t$) zwischen einem realen Start des Fahrzeugs (A) und einem geschätzten Start des Fahrzeugs (A) unter der Wirkung seines Eigengewichts ausführt, dann die Hilfsvorrichtung (8) die Steuerung ausführt, indem sie als Masse des Fahrzeugs (A) die Schätzung ($M_2$) der realen Masse des Fahrzeugs (A) verwendet, wobei der geschätzte Start des Kraftfahrzeugs (A) ausgehend von der vorbestimmten Masse ($M_1$) berechnet wird.

4. Verfahren nach einem der vorhergehenden Ansprüche, **dadurch gekennzeichnet, dass** das Anziehen der Bremsen (3) aus der Anwendung eines Anziehdrucks (P) resultiert, und dass der Schritt b) mindestens eine Folge (29) aufweist, in der:

b2) der Anziehdruck (P) der Bremsen (3) im Wesentlichen linear in Abhängigkeit von der Zeit gesenkt wird, gemäß einem Abnahmegrad im Wesentlichen gleich $k_{s1}$, der als Teil der Lösung eines Systems von zwei Gleichungen mit zwei Unbekannten definiert wird, das das Folgende ist:

$$\begin{cases} a_{cons} = \dfrac{k_{s1} \times k_{\mu} \times D_1}{M_1 \times R} \\[4mm] V_{cons} = \dfrac{1}{2} x \dfrac{k_{s1} \times k_{\mu} \times D_1^{\,2}}{M_1 \times R} \end{cases}$$

wobei $a_{cons}$, $V_{cons}$, $k_{\mu}$, $M_1$ und R eine als eine der vorbestimmten Bedingungen festgelegte Beschleunigung, eine als eine der vorbestimmten Bedingungen festgelegte Geschwindigkeit, ein Wirksamkeitskoeffizient der Bremsen, eine Masse des Kraftfahrzeugs (A), bzw. der mittlere Radius der Räder des Fahrzeugs (A) sind, während $k_{s1}$ eine der Unbekannten und $D_1$ die andere Unbekannte ist, nämlich die Zeit, um die vorbestimmten Bedingungen ausgehend vom Beginn der Folge b2) zu erreichen.

5. Verfahren nach den Ansprüchen 3 und 4, **dadurch gekennzeichnet, dass** in der Folge b2) als Masse $M_1$ des Fahrzeugs (A) die vorbestimmte Masse verwendet wird, wobei der Schritt b) eine Folge (31) aufweist, die auf die Folge b2) folgt und in der:

b3) der Anziehdruck (P) der Bremsen (3) im Wesentlichen linear in Abhängigkeit von der Zeit gesenkt wird, gemäß einem Abnahmegrad $k_{s2}$, der als Teil der Lösung eines Systems von zwei Gleichungen mit zwei Unbekannten definiert ist, das das Folgende ist:

$$\begin{cases} a_{cons} = \dfrac{\Delta M}{M_1} \times g \times \sin(\alpha) + \dfrac{k_{s2} \times k_{\mu} \times D_2}{M_1 \times R} \\[4mm] V_{cons} = \dfrac{\Delta M}{M_1} \times g \times \sin(\alpha) \times D_2 + \dfrac{1}{2} \times \dfrac{k_{s2} \times k_{\mu} \times D_2^{\,2}}{M_1 \times R} \end{cases}$$

wobei g, $\alpha$, $M_2$ und $\Delta M$ die Schwerebeschleunigung, eine Schätzung des Neigungswinkels der anteroposterioren Achse (X-X') des Kraftfahrzeugs (A) bezüglich der Waagrechten (H), die Schätzung der realen Masse des Fahrzeugs (A), bzw. die Abweichung zwischen der vorbestimmten Masse $M_1$ und dieser Schätzung $M_2$ gemäß der Gleichung $\Delta M = M_1$ $M_2$ sind, während $k_{s2}$ eine der Unbekannten und $D_2$ die andere der Unbekannten ist, nämlich die Zeit, um die vorbestimmten Bedingungen ausgehend vom Beginn der Folge b3) zu erreichen.

6. Verfahren nach Anspruch 5, **dadurch gekennzeichnet, dass** im Schritt b) die Hilfsvorrichtung (8) die Schätzung ($M_2$) der realen Masse des Fahrzeugs (A) gemäß der folgenden Gleichung ausführt:

$$M_2 = M_1 - \frac{k_{s1} \times k_\mu \times \Delta t}{g \times \sin(\alpha) \times R}$$

wobei $M_2$ und $\Delta t$ die Schätzung der realen Masse des Fahrzeugs (A) bzw. die Zeitabweichung zwischen dem realen und dem geschätzten Start des Fahrzeugs (A) unter der Wirkung seines Eigengewichts sind.

7. Verfahren nach einem der Ansprüche 4 bis 6, **dadurch gekennzeichnet, dass** der Schritt b) eine Folge (23) aufweist, auf die 'die Folge b2) folgt, und in der:

b1) die Hilfsvorrichtung die Bremsen mit einer vorbestimmten Geschwindigkeit löst.

8. Verfahren nach Anspruch 7, **dadurch gekennzeichnet, dass** vor der Folge b2) die Hilfsvorrichtung (8) einen Mindestanziehdruck ($P_{min}$) ermittelt, unterhalb dessen der Anziehdruck (P) der Bremsen (3) nicht ausreicht, damit diese Bremsen (3) das Fahrzeug (A) gegen das Gewicht dieses Fahrzeugs (A) blockiert halten, und dass die Hilfsvorrichtung (8) von der Folge b1) zur Folge b2) übergeht, wenn der Anziehdruck (P) der Bremsen (3) eine Schwelle ($P_1$) erreicht, die ausgehend vom Mindestanziehdruck ermittelt wird.

9. Verfahren nach einem der vorhergehenden Ansprüche, **dadurch gekennzeichnet, dass** die Hilfsvorrichtung (8) regelmäßig mindestens eine Information bezüglich einer Erfassung einer möglichen Anfahrsteuerung des Fahrzeugs (A) während des ganzen Verfahrens des Lösens der Bremsen überprüft, und dieses Verfahren vorzeitig unterbricht, wenn eine solche Anfahrsteuerung des Fahrzeugs (A) erfasst wird.

10. Berganfahrhilfevorrichtung für ein Kraftfahrzeug (A), **dadurch gekennzeichnet, dass** sie konzipiert ist, um ein progressives Lösen der Bremsen (3) des Kraftfahrzeugs (A) auszuführen, wenn keine Anfahrsteuerung des Fahrzeugs (A) stattfindet, nachdem ein manueller Halt der Bremsen (3) des Fahrzeugs (A) in einer Blockierstellung dieses stehenden Fahrzeugs (A) stattgefunden hat, wobei dieses progressive Lösen gemäß einer Steuerung erfolgt, die geeignet ist, um das Fahrzeug (A) dazu zu bringen, sich unter seinem Eigengewicht in Bewegung zu setzen, indem es global zu vorbestimmten Geschwindigkeits- und Beschleunigungsbedingungen ($a_{cons}$ und $V_{cons}$) ungleich Null tendiert, wobei die Hilfsvorrichtung (8) konzipiert ist, um das Lösen der Bremsen (3) zu stoppen, wenn die vorbestimmten Bedingungen ($a_{cons}$ und $V_{cons}$) als erreicht angesehen werden.

11. Hilfsvorrichtung nach Anspruch 10, **dadurch gekennzeichnet, dass** sie konzipiert ist, um ein Verfahren (20) nach einem der Ansprüche 1 bis 9 anzuwenden.

12. Kraftfahrzeug, **dadurch gekennzeichnet, dass** es eine Hilfsvorrichtung (8) nach einem der Ansprüche 10 und 11 aufweist.

**Claims**

1. Method of releasing the brakes (3) of a motor vehicle (A) equipped with a hill start assist device (8), **characterized in that** it comprises steps (23-27, 29-32) in which:

b) if no command to start the vehicle (A) occurs after a manual keeping of the brakes (3) of the vehicle (A) in a position that immobilizes this vehicle at a standstill ends, the assist device (8) releases the brakes (3) progressively according to a control designed to cause the vehicle (A) to start to move under its own weight generally tending toward predetermined non-zero speed and acceleration conditions ($a_{\text{cons}}$ and $V_{cons}$), then
c) when said predetermined conditions ($a_{\text{cons}}$ and $V_{cons}$) are considered to have been reached, the assist device (8) stops releasing the brakes (3).

2.  Method according to Claim 1, **characterized in that** it comprises a step (22) which begins as soon as said manual keeping of the brakes (3) in the position that immobilizes the vehicle (A) ends and in which:

    a) during a predetermined time period on expiry of which step b) begins, the assist device (8) automatically keeps the brakes (3) of the vehicle (A) in said position that immobilizes this vehicle (A) if no command to start the vehicle (A) has occurred.

3.  Method according to either of the preceding claims, **characterized in that**, in step b), the assist device (8) performs said control using, as the mass of the vehicle (A), a predetermined mass ($M_1$) and makes an estimate ($M_2$) of the actual mass of the vehicle (A) on the basis of a difference in time ($\Delta t$) between when the vehicle (A) actually starts and when the vehicle was estimated to start to move under the action of its own weight, then the assist device (8) performs said control law using, as the mass of the vehicle (A), said estimate ($M_2$) of the actual mass of the vehicle (A), said estimated start of movement of the motor vehicle (A) being calculated on the basis of said predetermined mass ($M_1$).

4.  Method according to any one of the preceding claims, **characterized in that** the application of the brakes (3) results from the application of a braking pressure (P), and **in that** step b) comprises at least one sequence (29) in which:

    b2) the pressure (P) with which the brakes (3) are applied is dropped substantially linearly as a function of time, at a rate of decrease substantially equal to $k_{s1}$ defined as forming part of the solution to a system of two simultaneous equations with two unknowns, which system is as follows:

$$\begin{cases} a_{cons} = \dfrac{k_{s1} \times k_\mu \times D_1}{M_1 \times R} \\ V_{cons} = \dfrac{1}{2} \times \dfrac{k_{s1} \times k_\mu \times D_1^{\,2}}{M_1 \times R} \end{cases},$$

    where $a_{cons}$, $V_{\text{cons}}$, $k_\mu$, $M_1$ and R are, respectively, an acceleration set as one of the predetermined conditions, a speed set as one of the predetermined conditions, a brake effectiveness coefficient, a mass of the motor vehicle (A), and the mean radius of the wheels of the vehicle (A), while $k_{s1}$ is one of the unknowns and $D_1$ is the other, namely the time taken for said predetermined conditions to be reached measured from the start of the sequence b2).

5.  Method according to Claims 3 and 4, **characterized in that**, in sequence b2), use is made, as the mass $M_1$ of the vehicle (A), of said predetermined mass, step b) comprising a sequence (31) which follows the sequence b2) and in which:

    b3) the pressure ($P$) with which the brakes (3) are applied is dropped substantially linearly as a function of time, at a rate of decrease $k_{s2}$ defined as forming part of the solution to a system of two simultaneous equations with two unknowns, which system is as follows:

$$\begin{cases} a_{cons} = \dfrac{\Delta M}{M_1} \times g \times \sin(\alpha) + \dfrac{k_{s2} \times k_\mu \times D_2}{M_1 \times R} \\ V_{cons} = \dfrac{\Delta M}{M_1} \times g \times \sin(\alpha) \times D_2 + \dfrac{1}{2} \times \dfrac{k_{s2} \times k_\mu \times D_2^{\,2}}{M_1 \times R} \end{cases},$$

    where g, $\alpha$, $M_2$ and $\Delta M$ are, respectively, the acceleration due to gravity, an estimate of the angle of inclination of the anterioposterior axis (X-X') of the motor vehicle (A) with respect to the horizontal (H), said estimate of the actual mass of the vehicle (A) and the difference between the predetermined mass $M_1$ and this estimate $M_2$ using the equation $\Delta M = M_1 - M_2$, while $k_{s2}$ is one of the unknowns and $D_2$ is the other, namely the time taken to reach said predetermined conditions measured from the start of sequence b3).

6.  Method according to Claim 5, **characterized in that**, in step b), the assist device (8) makes the estimate ($M_2$) of the actual mass of the vehicle (A) using an equation which is as follows:

$$M_2 = M_1 - \frac{k_{s1} \times k_\mu \times \Delta t}{g \times \sin(\alpha) \times R},$$

where $M_2$ and $\Delta t$ are, respectively, the estimate of the actual mass of the vehicle (A) and the difference in time between the actual and estimated times that the vehicle (A) starts to move under the action of its own weight.

7.  Method according to any one of Claims 4 to 6, **characterized in that** step b) comprises a sequence (23) that the sequence b2) follows and in which:

    b1) the assist device releases the brakes at a predetermined rate.

8.  Method according to Claim 7, **characterized in that**, before the sequence b2), the assist device (8) evaluates a minimum braking pressure ($P_{min}$) below which the pressure ($P$) with which the brakes (3) are applied is insufficient for these brakes (3) to succeed in keeping the vehicle (A) immobilized against the weight of this vehicle (A), and **in that** the assist device (8) switches from sequence b1) to sequence b2) when the pressure ($P$) with which the brakes (3) are applied reaches a threshold ($P_1$) evaluated on the basis of said minimum braking pressure.

9.  Method according to any one of the preceding claims, **characterized in that** the assist device (8) regularly checks at least one item of information relating to detection of a possible command to start the vehicle (A), throughout the brake release method, and prematurely interrupts this method if such a command to start the vehicle (A) is detected.

10. Hill start assist device for a motor vehicle (A), **characterized in that** it is designed to perform progressive release of the brakes (3) of the motor vehicle (A) if no command to start the vehicle (A) occurs after a manual keeping of the brakes (3) of the vehicle (A) in a position that immobilizes this vehicle (A) at a standstill ends, this progressive release of the brakes taking place according to a control law designed to cause the vehicle (A) to start to move under its own weight generally tending toward predetermined non-zero speed and acceleration conditions ($a_{cons}$ and $V_{cons}$), the assist device (8) being designed to halt the release of the brakes (3) when said predetermined conditions ($a_{cons}$ and $V_{cons}$) are considered to have been reached.

11. Assist device according to Claim 10, **characterized in that** it is designed to implement a method (20) according to any one of Claims 1 to 9.

12. Motor vehicle, **characterized in that** it comprises an assist device (8) according to either one of Claims 10 and 11.

**Fig. 1**

**Fig. 2**

14

**Fig. 3**

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2736027

- WO 2004058551 A